# EUROPEAN PATENT SPECIFICATION

(11) **EP 4 354 022 B1**
(45) Date of publication and mention of the grant of the patent: **12.08.2026**
(21) Application number: 22841943.8
(22) Date of filing: 29.06.2022
(51) Int. Cl.: F23G 5/50, B01D 53/62, B01D 53/78, C01B 32/50, G06Q 50/06, H02J 3/38, F23J 15/00, F23G 7/10, F23G 7/12, F23G 5/00, F23N 5/00

(54) **CONTROL DEVICE FOR CO2 RECOVERY DEVICE, CONTROL METHOD FOR CO2 RECOVERY DEVICE, AND PROGRAM**
STEUERUNGSVORRICHTUNG FÜR CO2-RÜCKGEWINNUNGSVORRICHTUNG, STEUERUNGSVERFAHREN FÜR CO2-RÜCKGEWINNUNGSVORRICHTUNG UND PROGRAMM
DISPOSITIF ET PROCÉDÉ DE COMMANDE POUR DISPOSITIF DE RÉCUPÉRATION DE CO2, ET PROGRAMME

(30) Priority: 15.07.2021 JP 2021117389
(43) Date of publication of application: 17.04.2024
(73) Proprietor: Mitsubishi Heavy Industries, Ltd., Tokyo 100-8332 (JP)
(72) Inventor: SUGIURA, Takuya, Tokyo 100-8332 (JP); TSUJIUCHI, Tatsuya, Tokyo 100-8332 (JP); IMADA, Junji, Tokyo 100-8332 (JP); SENBA, Noriaki, Tokyo 100-8332 (JP); HIRATA, Takuya, Tokyo 100-8332 (JP); SHINDO, Yoshitaka, Tokyo 100-8332 (JP); KATSUKI, Masatoshi, Tokyo 100-8332 (JP); TANAKA, Hiroshi, Tokyo 100-8332 (JP)
(74) Representative: Studio Torta S.p.A.
(86) International application number: PCT/JP2022/025904
(87) International publication number: WO 2023/286599

(56) References cited:
- WO-A1-2020/252513
- JP-A- 2002 181 304
- JP-A- 2005 332 171
- JP-A- 2013 158 685
- US-B1- 10 909 547
- CUMICHEO CONSTANZA ET AL: "Natural gas and BECCS: A comparative analysis of alternative configurations for negative emissions power generation", INTERNATIONAL JOURNAL OF GREENHOUSE GAS CONTROL, ELSEVIER, AMSTERDAM, NL, vol. 90, 16 August 2019 (2019-08-16), XP085871826, ISSN: 1750-5836, [retrieved on 20190816], DOI: 10.1016/J.IJGGC.2019.102798

## Description

### Technical Field

Priority is claimed on Japanese Patent Application No. 2021-117389, filed on July 15, 2021.

The present invention relates to a control device for a CO₂ recovery device that recovers CO₂ (carbon dioxide) contained in exhaust gas discharged from a combustion furnace, a control method for the CO₂ recovery device, and a program.

### Background Art

Generally, in plant facility such as a power plant, a steel mill, and a cleaning plant, the total amount of exhaust gas generated when fuel or waste (combustible material) is combusted in a combustion furnace is treated, or a part of the exhaust gas is treated in accordance with the required amount of CO₂ by a CO₂ recovery device, thereby the CO₂ in the exhaust gas is recovered. In this type of CO₂ recovery device, when the part of the exhaust gas is treated, a CO₂ concentration in the exhaust gas is measured, and an intake amount of the exhaust gas is determined to obtain a desired CO₂ required recovery amount (for example, refer to PTL 1).

### Citation List

### Patent Literature

[PTL 1] Japanese Patent No. 5237204
[PTL 2] US 10 909 547 B1

### Summary of Invention

### Technical Problem

By the way, in the above-described plant facility, in order to achieve carbon neutrality, there is a demand for further reduction of CO₂ emission amounts emitted from a combustion furnace serving as a CO₂ emission source, in recent years. There is an object that, in the CO₂ recovery device, a large amount of heat energy or electric power is used as device power, therefore, as the CO₂ recovery amount increases, the energy obtained from power generation or the use of residual heat decreases, and the energy utilization efficiency decreases.

At least one embodiment of the present invention has been made in view of the above-described circumstances, and an object of the present invention is to improve energy utilization efficiency while achieving carbon neutrality. Solution to Problem

In order to solve the above-described problems and achieve the object, a control device for a CO₂ recovery device according to the present invention is a control device for controlling an operation of the CO₂ recovery device, the CO₂ recovery device being disposed on a downstream side of a combustion furnace that combusts a combustible material in which a biomass-derived combustible material and a non-biomass-derived combustible material are mixed and recovering CO₂ in exhaust gas generated in the combustion furnace, the control device includes a first acquisition unit that acquires a ratio of weights of the biomass-derived combustible material and the non-biomass-derived combustible material to a weight of the combustible material introduced into the combustion furnace; a first calculation unit that calculates a ratio of CO₂ generated from the biomass-derived combustible material and the non-biomass-derived combustible material to CO₂ generated from the combustible material in accordance with the acquired ratio of the biomass-derived combustible material and the non-biomass-derived combustible material; and a second calculation unit that calculates an intake amount of the exhaust gas to the CO₂ recovery device based on the calculated ratio of the CO₂ generated from the non-biomass-derived combustible material and a flow rate of the exhaust gas.

According to the invention, the control device further comprises a planning unit that plans a planned CO₂ recovery amount to be recovered in a specific period from an amount of CO₂ generated in the specific period and the ratio of the CO₂ generated from the non-biomass-derived combustible material; and a setting unit that sets a target CO₂ recovery amount to be recovered per unit period shorter than the specific period in accordance with the planned CO₂ recovery amount which is planned, in which the second calculation unit may calculate the intake amount of the exhaust gas in accordance with the target CO₂ recovery amount and the flow rate of the exhaust gas.

Further, the CO₂ recovery device is connected to a branch flow path branched from an exhaust gas flow path connecting the combustion furnace and a chimney via a flow rate adjusting device, and the control device for a CO₂ recovery device may further include an adjustment unit that adjusts an opening degree of the flow rate adjusting device in accordance with the calculated intake amount of the exhaust gas.

In addition, the setting unit may set the target CO₂ recovery amount to be equal to or greater than a CO₂ recovery amount required to achieve carbon neutrality.

In addition, the second calculation unit may set an exhaust gas intake ratio from the target CO₂ recovery amount and a predetermined preliminary recovery rate, and may calculate the intake amount of the exhaust gas from the exhaust gas intake ratio and the flow rate of the exhaust gas.

In addition, the control device for a CO₂ recovery device may further include a power generation device that generates power by utilizing a heat of the exhaust gas generated in the combustion furnace; and a second acquisition unit that acquires an electric power demand forecast, in which the setting unit may calculate the target CO₂ recovery amount to be smaller than other periods during a period of high electric power demand, and may calculate the target CO₂ recovery amount to be larger than other periods during a period of low electric power demand, while maintaining the planned CO₂ recovery amount.

In addition, the planning unit may calculate a planned CO₂ recovery scheduled amount from a start of the specific period to a predetermined time point, the control device for a CO₂ recovery device may further include a first measuring unit that measures an actual CO₂ recovery amount recovered from the start of the specific period to the predetermined time point, and when the calculated planned CO₂ recovery scheduled amount and the measured actual CO₂ recovery amount do not match, the setting unit may recalculate the target CO₂ recovery amount in accordance with a difference value between the planned CO₂ recovery scheduled amount and the actual CO₂ recovery amount.

In addition, the setting unit may evenly divide the difference value between the planned CO₂ recovery scheduled amount and the actual CO₂ recovery amount by a remaining unit period of the specific period, and may set a new target CO₂ recovery amount based on the evenly divided value and the previous target CO₂ recovery amount.

In addition, the control device for a CO₂ recovery device may further include a third acquisition unit that acquires a planned CO₂ recovery amount for the specific period planned in another plant, in which the second acquisition unit may acquire an electric power demand forecast for each region of its own plant and the other plant in the specific period, and the setting unit may set, while maintaining a total planned CO₂ recovery amount of the own plant and the other plant, the target CO₂ recovery amount in accordance with a ratio of an electric power demand in the region of the own plant to an electric power demand of an entire region of the own plant and the other plant.

The control device for a CO₂ recovery device may further include a second measuring unit that measures a weight ratio for each predetermined composition of the combustible material, in which the first acquisition unit may acquire the ratio of weights of the biomass-derived combustible material and the non-biomass-derived combustible material to the weight of the combustible material, based on a measurement value of the second measuring unit.

In addition, a control method for a CO₂ recovery device according to the present invention is defined in the appended claim 10.

In addition, a program according to the present invention is defined in the appended claim 11.

### Advantageous Effects of Invention

According to the present invention, it is possible to improve energy utilization efficiency while achieving carbon neutrality.

### Brief Description of Drawings

Fig. 1 is a block diagram showing a schematic configuration of a cleaning plant provided with a CO₂ recovery device according to the Embodiment 1.
Fig. 2 is a block diagram showing a functional configuration of the control device for a CO₂ recovery device.
Fig. 3 is a flowchart showing a control procedure of the CO₂ recovery device.
Fig. 4 is a chart showing a relationship between a weight ratio of a biomass-derived waste and a non-biomass-derived waste and a CO₂ emission coefficient.
Fig. 5 is a block diagram showing a functional configuration of a control device for a CO₂ recovery device according to the Embodiment 2.
Fig. 6 is a flowchart showing a control procedure of the CO₂ recovery device.
Fig. 7 is a graph showing a relationship between a power generation output and a CO₂ recovery amount.
Fig. 8 is a block diagram showing a functional configuration of a control device for a CO₂ recovery device according to the Embodiment 3.
Fig. 9 is a flowchart showing a control procedure of a CO₂ recovery device.
Fig. 10 is a block diagram showing a functional configuration of a control device for a CO₂ recovery device according to the Embodiment 4.
Fig. 11 is a flowchart showing a control procedure of a CO₂ recovery device.

### Description of Embodiments of the invention

Hereinafter, a control device and a control method for a CO₂ recovery device according to at least one embodiment of the present invention will be described with reference to the drawings. The present invention is not limited to the present embodiment.

### [Embodiment 1]

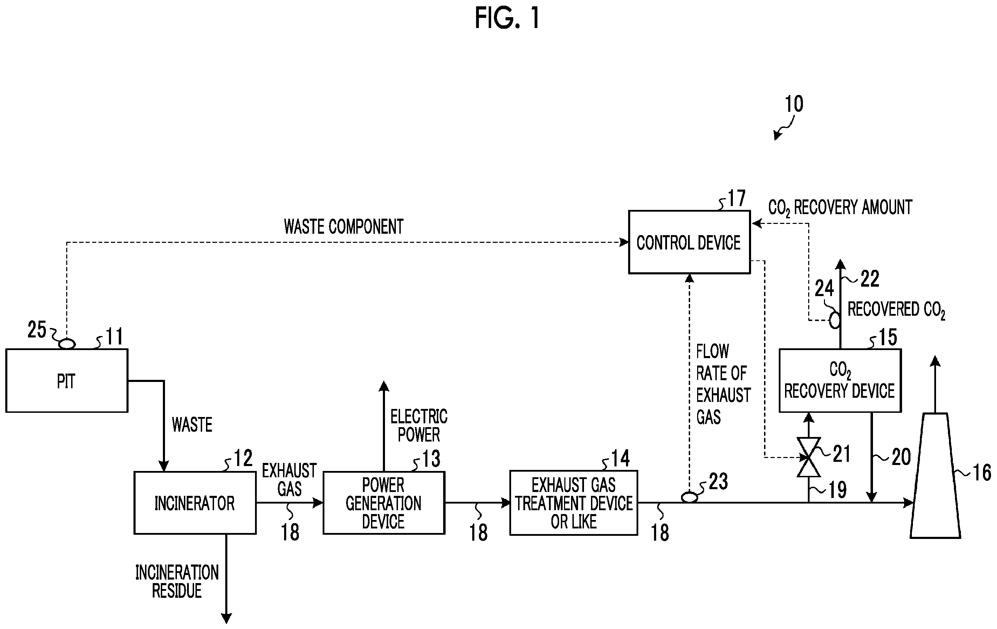

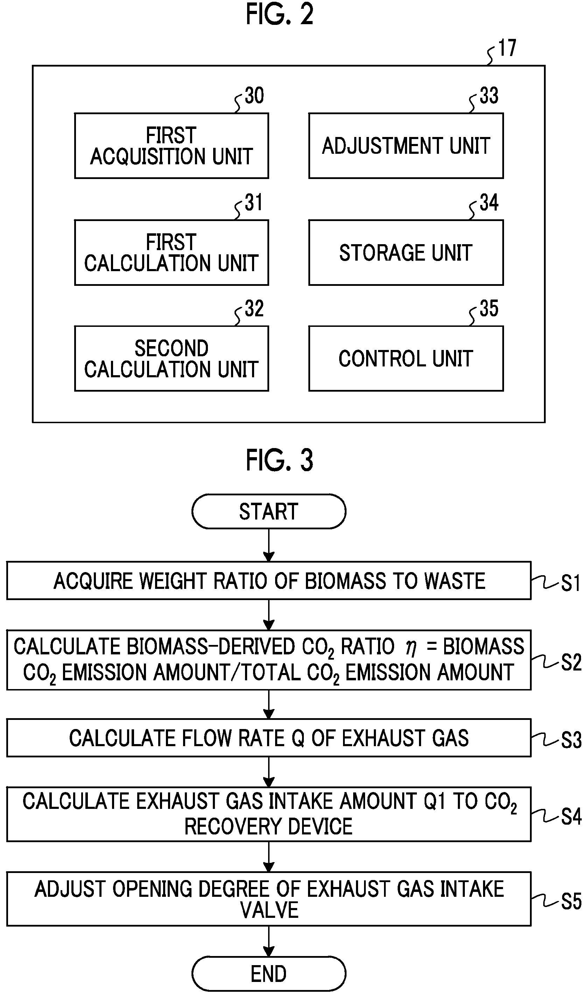

Fig. 1 is a block diagram showing a schematic configuration of a cleaning plant including a control device for a CO₂ recovery device according to the Embodiment 1. Fig. 2 is a block diagram showing a functional configuration of the control device for a CO₂ recovery device. The cleaning plant (plant facility) 10 collects waste (combustible materials) discarded from households or the like and incinerates the waste, and utilizes a heat energy generated when the waste is incinerated for power generation. In the present embodiment, a cleaning plant is exemplified as the plant facility. However, as long as a configuration in which a biomass-derived combustible material and a non-biomass-derived combustible material, which will be described later, are mixed and combusted is used, even a power plant or a steel mill may be used.

In Japan, the waste treated at the cleaning plant 10 is categorized into six groups such as (1) paper/cloth, (2) vinyl, (3) wood/bamboo/straw, (4) kitchen waste (food waste), (5) incombustible material, and (6) others, according to the composition, to be treated. Among the described-above, (1) paper/cloth, (3) wood/bamboo/straw, and (4) kitchen waste are organic resources derived from living organisms removing fossil resources and are treated as biomass-derived waste (biomass-derived combustible material). In addition, (2) vinyl, (5) incombustible material, and (6) others other than biomass-derived waste are treated as non-biomass-derived waste (non-biomass-derived combustible materials).

As shown in Fig. 1, the cleaning plant 10 includes the pit 11, the incinerator (combustion furnace) 12, the power generation device 13, the exhaust gas treatment device 14, the CO₂ recovery device 15, the chimney 16, and the control device 17. The incinerator (combustion furnace) 12, the power generation device 13, the exhaust gas treatment device 14, and the chimney 16 are respectively connected in series by the exhaust flow path 18 through which exhaust gas flows. In addition, the CO₂ recovery device 15 is connected, between the exhaust gas treatment device 14 and the chimney 16, to the exhaust flow path 18 through the branch flow path 19 that branches from the exhaust flow path 18 and takes in the exhaust gas, and return flow path 20 that returns the remaining exhaust gas that has recovered a required amount of CO₂ to the exhaust flow path 18. The branch flow path 19 is provided with an exhaust gas intake valve (flow rate adjusting device) 21 capable of adjusting a valve opening degree in order to adjust an intake amount of the exhaust gas. In addition, the CO₂ recovery device 15 is provided with a recovery flow path 22 through which the recovered CO₂ flows. In the present embodiment, the valve 21 is exemplified as the flow rate adjusting device for adjusting the intake amount of the exhaust gas flowing through the branch flow path 19, but the present disclosure is not limited thereto, as long as the intake amount (flow rate) of the exhaust gas can be adjusted, for example, it may be a damper.

The pit 11 temporarily stores waste (combustible materials) discharged from a household or the like, and the above-described biomass-derived waste and non-biomass-derived waste are mixed in the pit 11. The waste stored in the pit 11 is introduced into the incinerator 12 by using, for example, a crane or the like.

The incinerator 12 is a region where the introduced waste is incinerated, and air (oxygen) necessary for combustion is introduced by a blower or the like. The waste incinerated in the incinerator 12 is discarded as an incineration residue. The exhaust gas generated by incinerating the waste in the incinerator 12 flows into the power generation device 13 through the exhaust flow path 18. The power generation device 13 generates power by utilizing the heat energy of the exhaust gas, and includes a boiler that heats water with the heat energy to generate high-temperature steam, and a steam turbine generator that generates power by causing a turbine to be rotated by the generated high-temperature and high-pressure steam. The generated electric power can be used in the cleaning plant or can be transmitted to an electric power company. In the example of Fig. 1, the power generation device 13 is described as a separate body from the incinerator 12, but the power generation device 13 may be provided above the incinerator 12. The exhaust gas that has been heat-utilized in the power generation device 13 flows into the exhaust gas treatment device 14.

The exhaust gas treatment device 14 removes a harmful material in the exhaust gas and includes a removal device that reacts the harmful material with slaked lime to perform removal treatment, a filter device for removing fine flying ash (ash dust) in the exhaust gas, and a solidification device that solidifies the collected ash dust by adding cement and water.

The CO₂ recovery device 15 takes in a part or all of the exhaust gas and recovers the CO₂ contained in the exhaust gas. Specifically, in the CO₂ recovery device 15, the exhaust gas and an amine-based absorbing liquid are brought into contact with each other through an absorption tower (not shown) to generate a rich solution in which the absorbing liquid absorbs the CO₂. In addition, the CO₂ recovery device 15 sends the rich solution to a regeneration tower (not shown), and heats the rich solution with excess steam in the regeneration tower to liberate the CO₂ contained in the rich solution and regenerate the absorbing liquid, and the absorbing liquid is circulated to the absorption tower again. In addition, the liberated CO₂ is recovered and sent to a destination where the CO₂ is used through the recovery flow path 22 described above. The CO₂ is used, for example, in a plant factory for growing a plant or is used for a synthesizing chemical.

The chimney 16 is a tubular structure, and discharges exhaust gas performed a series of treatments to the atmosphere. In addition, in the example of Fig. 1, a flow rate sensor 23 that measures a flow rate of the exhaust gas flowing through the exhaust flow path 18 is provided in the exhaust flow path 18 between the exhaust gas treatment device 14 and the branch flow path 19. In addition, the recovery flow path 22 is provided with a sensor 24 that measures the recovery amount (weight) of the CO₂ from the flow rate of the CO₂ flowing through the recovery flow path 22. The sensor 24 may measure the recovery amount, for example, by changing the weight of a region where CO₂ is recovered.

In the above-described cleaning plant 10, in order to achieve carbon neutrality, there is a demand for further reduction of a CO₂ emission amount emitted from the incinerator 12 serving as a CO₂ emission source, in recent years. The cleaning plant 10 includes the CO₂ recovery device 15, and the CO₂ recovery device 15 utilizes a large amount of heat energy or electric power for regenerating of an absorbing liquid or as device power. For this reason, there is an object that as the CO₂ recovery amount increases, the energy obtained from power generation or the use of residual heat decreases, and the energy utilization efficiency decreases. The control device 17 for the CO₂ recovery device 15 according to the present embodiment calculates the intake amount of the exhaust gas to the CO₂ recovery device 15 in accordance with the ratio of the CO₂ generated from the non-biomass-derived waste and the flow rate of the exhaust gas. Therefore, the energy utilization efficiency is improved while achieving the carbon neutrality. Here, the term "carbon neutrality" refers to recover CO₂ recovery amount within a predetermined range (± 20%) from the theoretical CO₂ recovery amount based on the non-biomass-derived waste in consideration of the influence of variations in waste qualities and other measurement errors. That is, in the carbon neutral, by recovering CO₂ generated when the non-biomass-derived waste (material derived from fossil resources) is combusted, it is prevented an amount equivalent to CO₂ from being discharged to the atmosphere based on the non-biomass-derived waste. It should be noted that the carbon neutrality may include a configuration in which not only the CO₂ emission amount and the recovery amount are offset but also the recovery amount is larger than the emission amount (so-called carbon negative).

As shown in Fig. 2, the control device 17 includes the first acquisition unit 30, the first calculation unit 31, the second calculation unit 32, the adjustment unit 33, the storage unit 34, and the control unit 35. The first acquisition unit 30 acquires a ratio of each weight of the biomass-derived waste and the non-biomass-derived waste to a weight of the discarded waste (combustible material introduced into the incinerator 12). In Japan, it is obligatory to investigate and analyze the waste quality at least four times a year, and the weight ratio of the waste is measured for each composition with six compositions as the standard. As described above, the six compositions include (1) paper/cloth, (2) vinyl, (3) wood/bamboo/straw, (4) kitchen waste (food waste), (5) incombustible material, and (6) others, and among these, (1) paper/cloth, (3) wood/bamboo/straw, and (4) kitchen waste are treated as the biomass-derived waste. In addition, (2) vinyl, (5) incombustible material, and (6) others other than biomass-derived waste are treated as the non-biomass-derived waste.

In the present embodiment, the first acquisition unit 30 acquires data on the weight ratios of the biomass-derived waste and the non-biomass-derived waste, respectively, based on the weight ratio for each composition measured when the investigation and analysis of the waste quality are performed, to use the data until the next investigation and analysis. The data obtained by the latest investigation and analysis may be stored in the storage unit 34, and may be read and acquired from the storage unit 34 each time. In addition, a sensor (second measuring unit) 25 that measures the weight ratio of each predetermined composition of waste is provided on the pit 11, and the first acquisition unit 30 may acquire the data on the weight ratio of the biomass-derived waste and the non-biomass-derived waste based on the measurement value of the sensor 25 any time.

The first calculation unit 31 calculates the ratio of the CO₂ generated from the biomass-derived waste and the non-biomass-derived waste to the CO₂ generated when the waste is combusted, in accordance with the acquired ratio of the biomass-derived waste and the non-biomass-derived waste. The first calculation unit 31 calculates the ratio of the CO₂ generated from the biomass-derived waste and the non-biomass-derived waste in accordance with the above-mentioned CO₂ emission coefficient and the weight ratio for each component. A specific calculation method will be described later.

The second calculation unit 32 calculates the intake amount of exhaust gas to the CO₂ recovery device 15 in accordance with the calculated ratio of the CO₂ generated from the non-biomass-derived waste and the flow rate of the exhaust gas. As described above, the biomass-derived waste is obtained by removing fossil resources from biologically-derived organic resources. It is considered that new plant absorbs the generated the CO₂ and grows when the biomass-derived waste is combusted. For this reason, the biomass-derived waste theoretically has virtually no CO₂ (that is, carbon neutrality).

Therefore, in order to achieve carbon neutrality, it is necessary to recover the CO₂ generated from the non-biomass-derived waste, and the ratio of the CO₂ generated from the non-biomass-derived waste is a ratio of the CO₂ to be recovered. In the present embodiment, the second calculation unit 32 calculates the intake amount of the exhaust gas to the CO₂ recovery device 15 in accordance with the calculated ratio of the CO₂ generated from the non-biomass-derived waste, the CO₂ recovery rate α of the CO₂ recovery device 15, and the flow rate of the exhaust gas. A specific calculation method will be described later.

The adjustment unit 33 adjusts the valve opening degree of the exhaust gas intake valve 21 in accordance with the calculated intake amount of the exhaust gas. The storage unit 34 stores various types of data. In the present embodiment, the acquired weight ratio data of the biomass-derived waste and the non-biomass-derived waste is stored based on the weight ratio for each composition measured when the investigation and analysis of the waste quality are performed. The control unit 35 integrally controls each operation of the CO₂ recovery device 15.

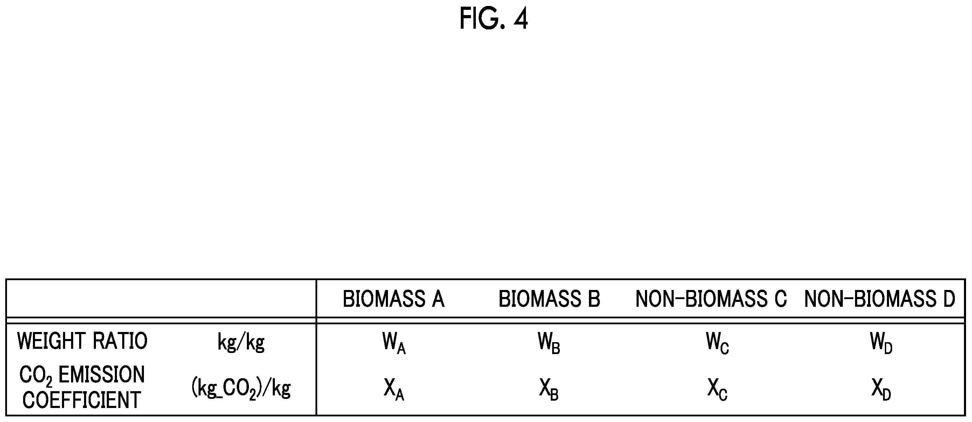

Next, the operation of the control device 17 for the CO₂ recovery device 15 will be described. Fig. 3 is a flowchart showing a control procedure of the CO₂ recovery device. Fig. 4 is a chart showing the relationship between the weight ratio of the biomass-derived waste and the non-biomass-derived waste and the CO₂ emission coefficient.

First, the control device 17 acquires the ratio of the weight of the biomass-derived waste to the weight of the waste (Step S1). As described above, the waste is categorized into six groups according to their composition. In Japan, it is obligatory to investigate and analyze the waste quality on a regular basis (four times a year). For this reason, when the investigation and analysis are performed, the waste weight of each composition is measured, and the weight ratio of each of the biomass-derived waste and the non-biomass-derived waste to the total waste weight is measured. The measurement result data is stored in the storage unit 34 and is used until the data obtained by the next investigation and analysis is obtained.

Next, the control device 17 calculates the CO₂ ratio η [%] generated when the biomass-derived waste is combusted (Step S2). As shown in Fig. 4, each component contained in the waste is biomass A, biomass B, non-biomass C, and non-biomass D, and in a case where the weights of the respective components are denoted by WA, WB, WC, and WD, respectively, and the CO₂ emission coefficient is denoted by XA, XB, XC, and XD, the CO₂ ratio η generated when the biomass-derived waste is combusted is calculated by Equation (1). $η = \frac{{W}_{A} {x}_{A} + {W}_{B} {x}_{B}}{{W}_{A} {x}_{A} + {W}_{B} {x}_{B} + {W}_{C} {x}_{C} + {W}_{D} {x}_{C}} \times 100 \left[%\right]$

In addition, from the weight ratio of each waste component, for example, by using the equation defined in the feed-in tariff system (Fit system) for renewable energy, the biomass-derived power generation ratio ηb [%] may be calculated in accordance with the ratio of a calorific value derived from biomass and a calorific value derived from non-biomass and the calculated biomass-derived power generation ratio ηb may be the CO₂ ratio η generated when the biomass-derived waste is combusted.

Next, the control device 17 measures the flow rate Q of the exhaust gas flowing through the exhaust flow path 18 using the flow rate sensor 23 (Step S3). Next, the control device 17 calculates the exhaust gas intake amount Q1 to the CO₂ recovery device 15 (Step S4). Here, since the ratio of CO₂ to be recovered is the CO₂ ratio (1-η/100) generated when the non-biomass-derived waste is combusted, the exhaust gas intake ratio γ is calculated, as shown in Equation (2), from the CO₂ ratio (1-η/100) generated when the non-biomass-derived waste is combusted and the CO₂ recovery rate α of the CO₂ recovery device. $γ = \left[1-\frac{η}{100}\right] \div α \times 100 \left[%\right]$

Therefore, the exhaust gas intake amount Q1 can be calculated by the product (γ · Q) of the exhaust gas intake ratio γ and the exhaust gas flow rate Q. The exhaust gas intake ratio γ may be calculated by setting a preliminary recovery rate in a CO₂ recovery amount to be recovered (a target CO₂ recovery amount described later). According to this configuration, the exhaust gas intake ratio γ can be calculated from the CO₂ recovery amount to be recovered and the preliminary recovery rate, and the exhaust gas intake ratio γ and the exhaust gas intake amount Q1 can be easily calculated.

Next, the control device 17 controls the opening degree of the exhaust gas intake valve 21 to the calculated exhaust gas intake amount Q1 (Step S5). As a result, the CO₂ recovery device 15 can recover the CO₂ that is generated when the non-biomass-derived waste is combusted, by allowing the appropriate exhaust gas intake amount Q1 to flow into the CO₂ recovery device 15. Furthermore, since CO₂ is not excessively recovered, the generated electric power or the heat energy can be effectively utilized. Therefore, in the present configuration, it is possible to improve energy utilization efficiency while achieving the carbon neutrality.

### [Embodiment 2]

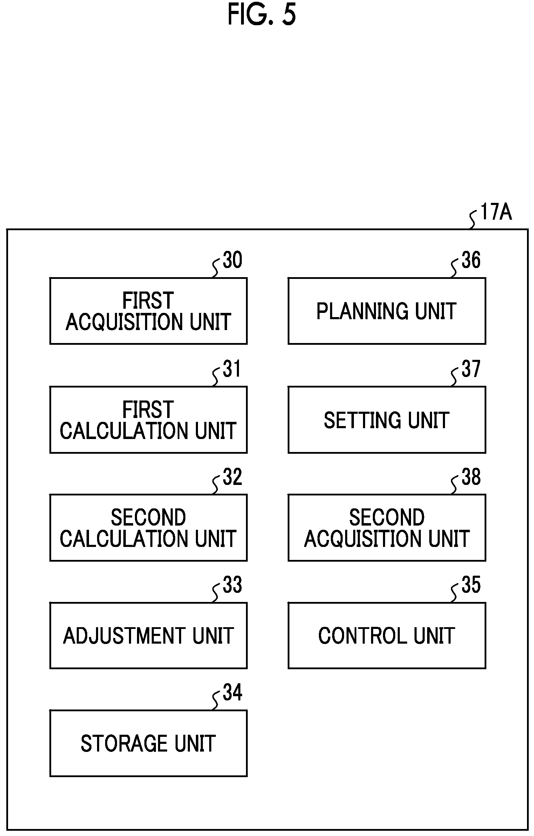

Next, the control device for a CO₂ recovery device according to the Embodiment 2 will be described. Fig. 5 is a block diagram showing a functional configuration of the control device for a CO₂ recovery device according to the Embodiment 2. The same configurations as those in the Embodiment 1 are designated by the same reference numerals, and the description thereof will be omitted. As shown in Fig. 5, the control device 17A includes the first acquisition unit 30, the first calculation unit 31, the second calculation unit 32, the adjustment unit 33, the storage unit 34, the control unit 35, the planning unit 36, the setting unit 37, and the second acquisition unit 38.

The planning unit 36 calculates and plans a planned CO₂ recovery amount to be recovered in a specific period from an amount of the CO₂ generated in the specific period and a ratio of CO₂ generated from the non-biomass-derived combustible materials. The planned CO₂ recovery amount is a CO₂ recovery amount to be recovered in the specific period. The specific period is arbitrarily set as the recovery period, and is set to, for example, one day, but may be one year or one month. A specific method for calculating the planned CO₂ recovery amount will be described later.

The setting unit 37 calculates and sets the target CO₂ recovery amount to be recovered per unit period shorter than the specific period in accordance with the calculated planned CO₂ recovery amount. The setting unit 37 sets a recovery amount equal to or greater than the CO₂ recovery amount required to achieve carbon neutrality to the target CO₂ recovery amount. That is, when carbon neutrality is achieved, the setting unit 37 may not only offset the CO₂ emission amount generated per unit period from the non-biomass-derived combustible material and the target CO₂ recovery amount, but also set the target CO₂ recovery amount to be larger than the emission amount. The unit period is set to, for example, one hour, and a value obtained by dividing the planned CO₂ recovery amount by time is the target CO₂ recovery amount.

The second acquisition unit 38 acquires an electric power demand forecast. More specifically, in a region supplied by an electric power company that transmits all or part of the electric power generated by a cleaning plant, the electric power demand forecast for the specific period predicted (also referred to as a forecast) from the past electric power demand is acquired. In the embodiment, information regarding the electric power demand forecast is acquired, but an electric power demand may be predicted by the second acquisition unit 38.

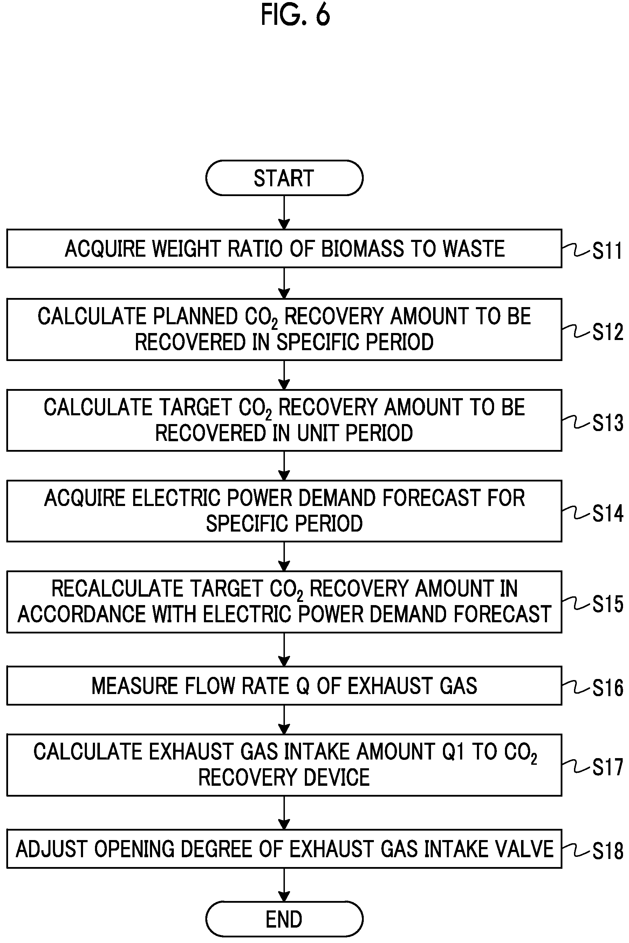

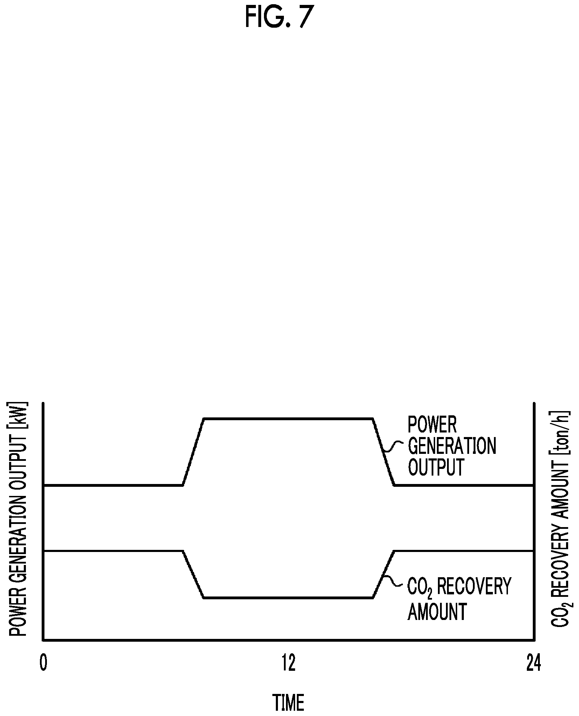

Next, the operation of the control device 17A for the CO₂ recovery device 15 will be described. Fig. 6 is a flowchart showing a control procedure of the CO₂ recovery device. Fig. 7 is a graph showing a relationship between a power generation output and the CO₂ recovery amount. The same operation as those of the above-described Embodiment 1 will be omitted. First, the control device 17A acquires the ratio of the weight of the biomass-derived waste to the weight of the waste (Step S11).

Next, the control device 17A calculates the planned CO₂ recovery amount to be recovered in the specific period (Step S12). The above-described planned CO₂ recovery amount is the CO₂ recovery amount to be recovered in the specific period, and corresponds to the amount of the CO₂ generated when the non-biomass-derived waste is combusted in the specific period. Therefore, the control device 17A calculates the CO₂ ratio (1-η/100) [%] generated when the non-biomass-derived waste is combusted, and calculates planned CO₂ recovery amount C_{y} from the value and the total CO₂ amount Cₜₒₜ emitted in the specific period, by using Equation (3). The total CO₂ amount Cₜₒₜ emitted in the specific period can be acquired from, for example, a past emission state or the like. ${C}_{y} = {C}_{tot} \times \left(1-\frac{η}{100}\right) \left[{kg}_{CO 2}\right]$

Next, the control device 17A calculates the target CO₂ recovery amount to be recovered in the unit period (Step S13). In the present embodiment, it is assumed that the specific period is set to one day and the unit period is set to one hour, respectively. In this case, the target CO₂ recovery amount can be calculated by dividing the calculated planned CO₂ recovery amount by time (dividing by 24).

Next, the control device 17A acquires the electric power demand forecast for the specific period (Step S14). That is, the information regarding the forecast of the daily electric power demand change is acquired. Normally, the electric power demand in the region where the electric power company supplies electric power is not uniform, and for example, the electric power demand tends to be larger in the day time than in the night time. Therefore, the forecast information of the daily electric power demand change is acquired, and the information is used for CO₂ recovery.

Next, the control device 17A recalculates the target CO₂ recovery amount in accordance with the acquired electric power demand forecast (Step S15). That is, as shown in Fig. 7, the control device 17A recalculates by reducing the target CO₂ recovery amount so that the power generation output is larger in the time zone when the electricity price is high or the time zone when the electric power demand is high than in the other time zone, and by increasing the target CO₂ recovery amount so that the power generation output is smaller in the time zone when the electricity price is low or the time zone when the electric power demand is low than in the other time zone, while maintaining the planned CO₂ recovery amount. As a result, energy can be effectively utilized while maintaining the planned CO₂ recovery amount recovered in one day (specific period).

Next, the control device 17A measures the flow rate Q of the exhaust gas flowing through the exhaust flow path 18 using the flow rate sensor 23 (Step S16). Next, the control device 17A calculates the exhaust gas intake amount Q1 to the CO₂ recovery device 15 (Step S17), and controls the opening degree of the exhaust gas intake valve 21 to the calculated exhaust gas intake amount Q1 (Step S18). In this case, for example, the exhaust gas intake amount Q1 can be calculated from the calculated target CO₂ recovery amount, the flow rate Q of the exhaust gas, the CO₂ concentration in the exhaust gas, and the exhaust gas intake ratio γ. The CO₂ concentration in the exhaust gas may be measured together with the flow rate Q of the exhaust gas, or data acquired in advance may be used. In this configuration, the generated electric power and heat energy can be effectively utilized, and it is possible to improve the energy utilization efficiency while achieving carbon neutrality.

### [Embodiment 3]

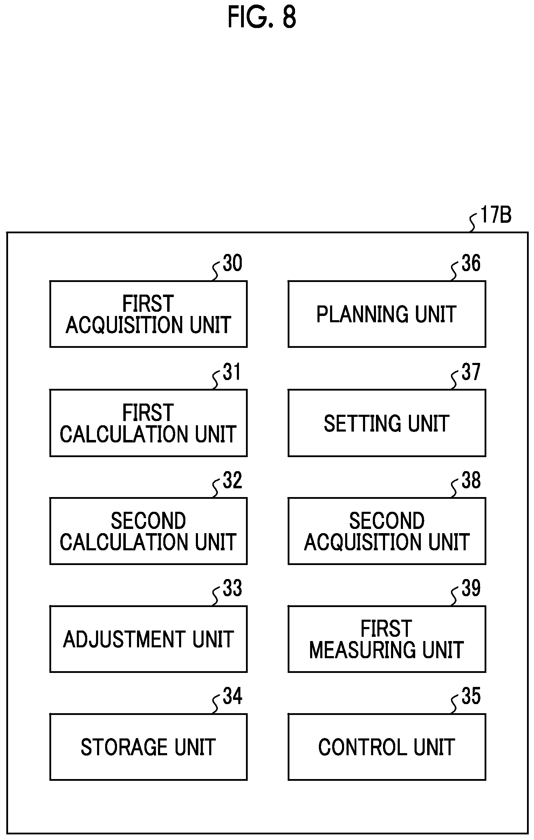

Next, the control device for a CO₂ recovery device according to the Embodiment 3 will be described. Fig. 8 is a block diagram showing a functional configuration of the control device for a CO₂ recovery device according to the Embodiment 3. The same configurations as those in the Embodiments 1 and 2 are designated by the same reference numerals and the description thereof will be omitted. As shown in Fig. 8, the control device 17B includes the first acquisition unit 30, the first calculation unit 31, the second calculation unit 32, the adjustment unit 33, the storage unit 34, the control unit 35, the planning unit. 36, the setting unit 37, the second acquisition unit 38, and the first measuring unit 39.

The planning unit 36 calculates the planned CO₂ recovery amount to be recovered in the specific period described above, and also calculates the planned CO₂ recovery scheduled amount from a start of the specific period to a predetermined time point. For example, when the specific period is one month, while the planned CO₂ recovery amount to be recovered in the one month is calculated, the planned CO₂ recovery scheduled amount from the start of the specific period to the predetermined time point is calculated. The planned CO₂ recovery scheduled amount is a scheduled amount that passes at a predetermined time point from the start of the specific period in order to achieve the planned CO₂ recovery amount. For example, when the planned CO₂ recovery amount in the specific period is denoted by α, the planned CO₂ recovery scheduled amount from the start of the specific period to the time point when half of the specific period elapses is α/2. In addition, the above-described planned CO₂ recovery amount is the CO₂ recovery amount to be recovered in the specific period, and corresponds to the amount of CO₂ generated when the non-biomass-derived waste is combusted in the specific period.

The first measuring unit 39 measures, for example, the CO₂ recovery amount (weight) actually recovered from the flow rate of CO₂ flowing through the recovery flow path 22 by using the sensor 24 provided in the recovery flow path 22. Specifically, the actual CO₂ recovery amount can be measured from the flow rate of CO₂ flowing through the recovery flow path 22 and the weight per unit volume.

In the CO₂ recovery device 15, in a case where the CO₂ is recovered normally, it is assumed that the calculated planned CO₂ recovery scheduled amount and the actual CO₂ recovery amount match with each other, but the planned CO₂ recovery scheduled amount and the actual CO₂ recovery amount do not match with each other in actual operation state because of the measurement error or the like.

In this embodiment, when the calculated planned CO₂ recovery scheduled amount and the measured actual CO₂ recovery amount do not match, the setting unit 37 reviews (recalculates) the target CO₂ recovery amount in accordance with a difference value between the planned CO₂ recovery scheduled amount and the actual CO₂ recovery amount.

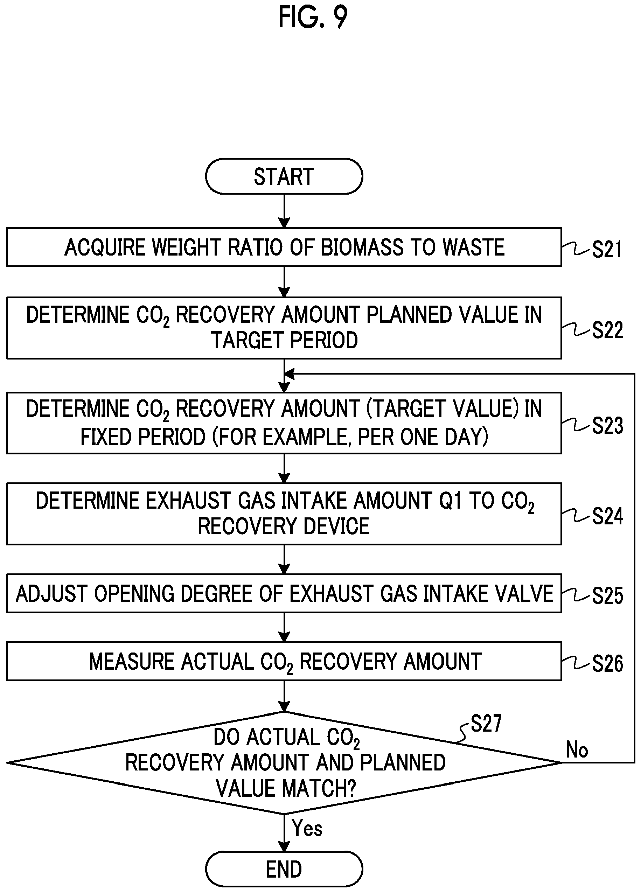

Next, the operation of the control device 17B for the CO₂ recovery device 15 will be described. Fig. 9 is a flowchart showing a control procedure of the CO₂ recovery device. The same operation as those of the above-described Embodiments 1 and 2 will be omitted. First, the control device 17B acquires the ratio of the weight of the biomass-derived waste to the weight of the waste (Step S21).

Next, the control device 17B calculates a planned CO₂ recovery amount (planned value) to be recovered in the specific period (target period) (Step S22). The above-described planned CO₂ recovery amount is the CO₂ recovery amount to be recovered in the specific period, and corresponds to the amount of the CO₂ generated when the non-biomass-derived waste is combusted in the specific period. Therefore, the control device 17B calculates the planned CO₂ recovery amount to be recovered in the specific period in the same manner as described above.

Next, the control device 17B calculates a target CO₂ recovery amount (target value) to be recovered in a unit period (fixed period) (Step S23). In the present embodiment, it is assumed that the specific period is set to one week and the unit period is set to one day, respectively. In this case, the target CO₂ recovery amount can be calculated by dividing the calculated planned CO₂ recovery amount by day (dividing by 7).

Next, the control device 17B calculates the exhaust gas intake amount Q1 to the CO₂ recovery device 15 (Step S24). That is, the control device 17B can calculate the exhaust gas intake amount Q1 from the flow rate Q of the exhaust gas flowing through the exhaust flow path 18 measured using the flow rate sensor 23, the calculated target CO₂ recovery amount, and the CO₂ concentration in the above-described exhaust gas and the exhaust gas intake ratio γ. Then, the control device 17B controls the opening degree of the exhaust gas intake valve 21 to the calculated exhaust gas intake amount Q1 (Step S25).

Next, the control device 17B acquires an actual CO₂ recovery amount actually recovered by the CO₂ recovery device 15 (Step S26). Specifically, the actual CO₂ recovery amount is calculated and acquired from the CO₂ flow rate measured by the sensor 24 provided in the recovery flow path 22 and the weight per unit volume of the CO₂.

Next, the control device 17B calculates the planned CO₂ recovery scheduled amount from the start of the specific period to the predetermined time point, and determines whether or not the planned CO₂ recovery scheduled amount and the actual CO₂ recovery amount match (Step S27). In this determination, when the planned CO₂ recovery scheduled amount and the actual CO₂ recovery amount match (Step S27; Yes), the process is ended. On the other hand, when the planned CO₂ recovery scheduled amount and the actual CO₂ recovery amount do not match (Step S27; No), the control device 17B returns the process to Step S23 and recalculates the target CO₂ recovery amount. Specifically, when the actual CO₂ recovery amount is smaller than the planned CO₂ recovery scheduled amount, a difference value between the planned CO₂ recovery scheduled amount and the actual CO₂ recovery amount is obtained, and the value obtained by evenly dividing the difference value by the number of remaining days of the specific period is added to the previous target CO₂ recovery amount to obtain a new target CO₂ recovery amount. In addition, when the actual CO₂ recovery amount is larger than the planned CO₂ recovery scheduled amount, a difference value between the planned CO₂ recovery scheduled amount and the actual CO₂ recovery amount is obtained, and the value obtained by evenly dividing the difference value by the number of the remaining days (unit period) of the specific period is subtracted from the previous target CO₂ recovery amount to obtain a new target CO₂ recovery amount. In this configuration, in a case where the actual CO₂ recovery amount is smaller or larger than the planned CO₂ recovery scheduled amount, since the new target CO₂ recovery amount is set by obtaining a difference value between the planned CO₂ recovery scheduled amount and the actual CO₂ recovery amount, and by adding or subtracting the value obtained by evenly dividing the difference value by the number of the remaining days of the specific period to or from the previous target CO₂ recovery amount, the target CO₂ recovery amount can be reviewed before the specific period elapses and the carbon neutrality for the specific period can be achieved.

### [Embodiment 4]

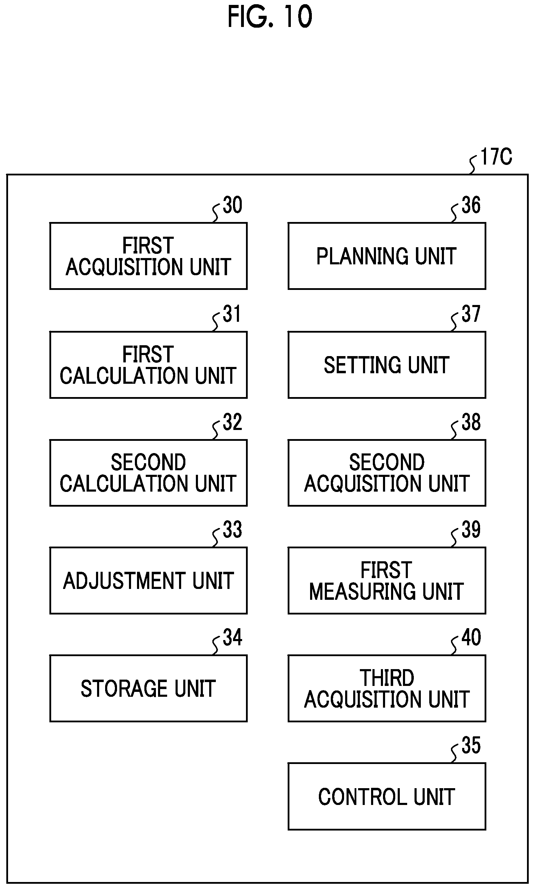

Next, a control device for a CO₂ recovery device according to the Embodiment 4 will be described. Fig. 10 is a block diagram showing a functional configuration of the control device for a CO₂ recovery device according to the Embodiment 4. The same configurations as those in the Embodiments 1 to 3 are designated by the same reference numerals and the description thereof will be omitted. In this embodiment, CO₂ generated when non-biomass-derived waste discharged from mutual cleaning plants is combusted is recovered in cooperation with a plurality of cleaning plants. That is, from the viewpoints of all the cleaning plants, an amount of CO₂ to be recovered is allocated in accordance with the electric power demand in the region of each cleaning plant while achieving carbon neutrality.

As shown in Fig. 10, the control device 17C includes the first acquisition unit 30, the first calculation unit 31, the second calculation unit 32, the adjustment unit 33, the storage unit 34, the control unit 35, the planning unit 36, the setting unit 37, the second acquisition unit 38, the first measuring unit 39, and the third acquisition unit 40. The control devices 17C are respectively provided in the CO₂ recovery devices 15 of the mutual cleaning plants, and control the operations of the CO₂ recovery devices 15 of each plant in cooperation with each other. The control device 17C of the CO₂ recovery device 15 of each plant has the same configuration, and one of them will be described as an example.

In the present embodiment, the second acquisition unit 38 acquires not only the electric power demand forecast in the region of the own plant but also the electric power demand forecast in the region of the other plant. That is, the control devices 17C are configured to communicate with each other via, for example, a network line, and transmit and receive information necessary for each other. In addition, the third acquisition unit 40 acquires the planned CO₂ recovery amount calculated at the other plant.

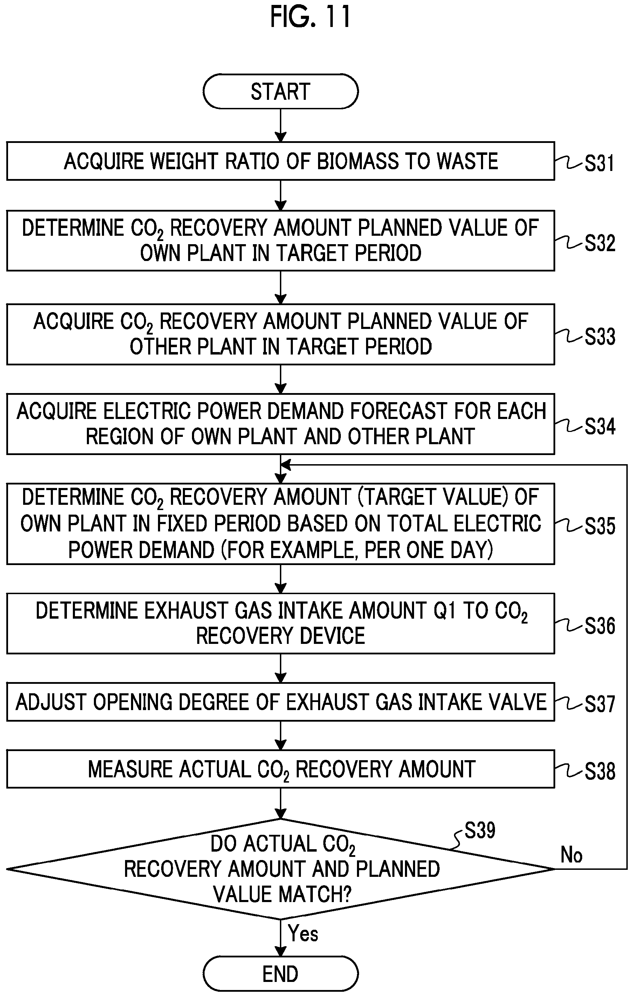

Next, the operation of the control device 17C of the CO₂ recovery device 15 will be described. Fig. 11 is a flowchart showing a control procedure of the CO₂ recovery device. Although Fig. 11 shows the operation of one control device 17C in the own plant, the other control device 17C in the other plant also operates in the same manner. In addition, description of the same operations as those of the above-described Embodiments 1 to 3 will be omitted.

First, the control device 17C acquires the ratio of the weight of the biomass-derived waste to the weight of the waste (Step S31).

Next, the control device 17C calculates a planned CO₂ recovery amount (planned value) to be recovered in the specific period (target period) of the own plant (Step S32). In addition, the control device 17C acquires a planned CO₂ recovery amount (planned value) to be recovered in the specific period (target period) of the other plant (Step S33). These planned CO₂ recovery amounts are CO₂ recovery amounts to be recovered in the specific period in the own plant or the other plant, and correspond to the amount of CO₂ generated when non-biomass-derived waste is combusted in the specific period. Therefore, similarly to the configuration described above, the control device 17C calculates or acquires the planned CO₂ recovery amount of the own plant or the other plant to be recovered in the specific period. Then, each control device 17C grasps the total CO₂ recovery amount to be recovered in all the plants.

Next, the control device 17C acquires an electric power demand forecast for each region of the own plant and the other plant in the specific period (Step S34). In this case, the control device 17C obtains the ratio of the electric power demand in the region of the own plant to the total electric power demand. Next, the control device 17C calculates the target CO₂ recovery amount (target value) of the own plant in a unit period (fixed period) based on the ratio of the electric power demand in the region of the own plant to the total electric power demand (Step S35). Here, in order to make effective use of the energy, the control device 17C recalculates the planned CO₂ recovery amount of each plant so that the planned CO₂ recovery amount of the plant having a large ratio of the electric power demand in the region is smaller than the planned CO₂ recovery amount of the plant having a small ratio of the electric power demand in the region. In the present embodiment, it is assumed that the specific period is set to one week and the unit period is set to one day, respectively. In this case, the target CO₂ recovery amount can be calculated by dividing the newly calculated planned CO₂ recovery amount by day (dividing by 7).

Next, the control device 17C calculates the exhaust gas intake amount Q1 to the CO₂ recovery device 15 (Step S36). That is, the control device 17C can calculate the exhaust gas intake amount Q1 from the flow rate Q of the exhaust gas flowing through the exhaust flow path 18 measured using the flow rate sensor 23, the calculated target CO₂ recovery amount, and the CO₂ concentration in the above-described exhaust gas and the exhaust gas intake ratio γ. Then, the control device 17C controls the opening degree of the exhaust gas intake valve 21 to the calculated exhaust gas intake amount Q1 (Step S37).

Next, the control device 17C acquires an actual CO₂ recovery amount actually recovered by the CO₂ recovery device 15 (Step S38). Specifically, the actual CO₂ recovery amount is calculated and acquired from the CO₂ flow rate measured by the sensor 24 provided in the recovery flow path 22 and the weight per unit volume of the CO₂.

Next, the control device 17C calculates the planned CO₂ recovery scheduled amount from the start of the specific period to a predetermined time point, and determines whether or not the planned CO₂ recovery scheduled amount and the actual CO₂ recovery amount match (Step S39). In this determination, when the planned CO₂ recovery scheduled amount and the actual CO₂ recovery amount match (Step S39; Yes), the process is ended. On the other hand, when the planned CO₂ recovery scheduled amount and the actual CO₂ recovery amount do not match (Step S39; No), the control device 17C returns the process to Step S35 and recalculates the target CO₂ recovery amount. Specifically, when the actual CO₂ recovery amount is smaller than the planned CO₂ recovery scheduled amount, a difference value between the planned CO₂ recovery scheduled amount and the actual CO₂ recovery amount is obtained, and the value obtained by evenly dividing the difference value by the number of remaining days of the specific period is added to the previous target CO₂ recovery amount to obtain a new target CO₂ recovery amount. In addition, when the actual CO₂ recovery amount is larger than the planned CO₂ recovery scheduled amount, a difference value between the planned CO₂ recovery scheduled amount and the actual CO₂ recovery amount is obtained, and the value obtained by evenly dividing the difference value by the number of the remaining days of the specific period is subtracted from the previous target CO₂ recovery amount to obtain a new target CO₂ recovery amount. In this configuration, since the CO₂ recovery amount to be recovered at each plant is recovered in cooperation (accommodation) at all the plants, CO₂ recovery can be efficiently performed. In particular, in the present embodiment, the energy utilization efficiency can be improved in each plant while achieving carbon neutrality in a plurality of the plants by redistributing the CO₂ recovery amount to be recovered by each plant in accordance with the electric power demand in the region where each plant is located in the specific period.

The control device 17 for the CO₂ recovery device 15 according to the present embodiment of the invention has been described above, but the control device 17 may be implemented in various different forms other than the above-described embodiment. Each component of the control device 17 for the CO₂ recovery device 15 shown in the drawings is functionally conceptual and may not be configured physically as shown in the drawings. That is, the specific form of each device is not limited to those shown in the drawings. The entirety or part of device may be configured by being functionally or physically distributed or integrated in an arbitrary unit in accordance with a processing load, a usage status, or the like of each device.

The configuration of the control device 17 for the CO₂ recovery device 15 is implemented, for example, by a program loaded in a memory as software. In the above-described embodiment, the configuration has been described as the functional blocks implemented by the cooperation of these hardware or software. That is, these functional blocks can be implemented in various forms by means of only hardware, only software, or a combination thereof.

The component described above includes those that can be easily assumed by those skilled in the art and those that are substantially the same. Furthermore, the above configuration can be appropriately combined. In addition, various omissions, substitutions, or modifications of the configurations can be made without departing from the scope of the invention as defined in the appended claims.

### Reference Signs List

- 10:: Cleaning plant (Plant facility)
- 12:: Incinerator (Combustion furnace)
- 13:: Power generation device
- 14:: Exhaust gas treatment device
- 15:: CO₂ recovery device
- 17, 17A, 17B, 17C:: Control device
- 18:: Exhaust flow path
- 25:: Sensor (Second measuring unit)
- 30:: First acquisition unit
- 31:: First calculation unit
- 32:: Second calculation unit
- 33:: Adjustment unit
- 34:: Storage unit
- 35:: Control unit
- 36:: Planning unit
- 37:: Setting unit
- 38:: Second acquisition unit
- 39:: First measuring unit
- 40:: Third acquisition unit

## Claims

1. A control device (17, 17A, 17B, 17C) for a CO₂ recovery device (15) for controlling an operation of the CO₂ recovery device (15), the CO₂ recovery device (15) being disposed on a downstream side of a combustion furnace (12) that combusts a combustible material in which a biomass-derived combustible material and a non-biomass-derived combustible material are mixed and recovering CO₂ in exhaust gas generated in the combustion furnace (12), the control device (17, 17A, 17B, 17C) comprising:
a first acquisition unit (30) that is configured to acquire a ratio of weights of the biomass-derived combustible material and the non-biomass-derived combustible material to a weight of the combustible material introduced into the combustion furnace (12);
a first calculation unit (31) that is configured to calculate a ratio (η [%]) of CO₂ generated from the biomass-derived combustible material and the non-biomass-derived combustible material to CO₂ generated from the combustible material in accordance with the acquired ratio of the biomass-derived combustible material and the non-biomass-derived combustible material; and
a second calculation unit (32) that is configured to calculate an intake amount (Q1) of the exhaust gas to the CO₂ recovery device (15) based on the calculated ratio (γ) of the CO₂ generated from the non-biomass-derived combustible material and a flow rate (Q) of the exhaust gas, **characterized by** comprising:
a planning unit (36) that is configured to plan a planned CO₂ recovery amount to be recovered in a specific period from an amount of CO₂ generated in the specific period and the ratio of the CO₂ generated from the non-biomass-derived combustible material; and
a setting unit (37) that is configured to set a target CO₂ recovery amount to be recovered per unit period shorter than the specific period in accordance with the planned CO₂ recovery amount which is planned,
wherein the second calculation unit (32) is configured to calculate the intake amount of the exhaust gas in accordance with the target CO₂ recovery amount and the flow rate of the exhaust gas.

2. The control device (17, 17A, 17B, 17C) for a CO₂ recovery device (15) according to claim 1,
wherein the CO₂ recovery device (15) is connected to a branch flow path (19) branched from an exhaust gas flow path (18) connecting the combustion furnace (12) and a chimney (16) via a flow rate adjusting device (21), and
the control device (17, 17A, 17B, 17C) for a CO₂ recovery device (15) further comprises
an adjustment unit (17) that adjusts an opening degree of the flow rate adjusting device (21) in accordance with the calculated intake amount of the exhaust gas.

3. The control device (17, 17A, 17B, 17C) for a CO₂ recovery device (15) according to claim 1 or 2,
wherein the setting unit (37) is configured to set the target CO₂ recovery amount to be equal to or greater than a CO₂ recovery amount required to achieve carbon neutrality.

4. The control device (17, 17A, 17B, 17C) for a CO₂ recovery device (15) according to any one of claims 1 to 3,
wherein the second calculation unit (32) is configured to sets an exhaust gas intake ratio from the target CO₂ recovery amount and a predetermined preliminary recovery rate, and is configured to calculate the intake amount of the exhaust gas from the exhaust gas intake ratio and the flow rate of the exhaust gas.

5. The control device (17, 17A, 17B, 17C) for a CO₂ recovery device (15) according to any one of claims 1 to 4, further comprising:
a power generation device (13) that generates power by utilizing a heat of the exhaust gas generated in the combustion furnace (12); and
a second acquisition unit (38) that is configured to acquire an electric power demand forecast,
wherein the setting unit (37) is configured to calculate the target CO₂ recovery amount to be smaller than other periods during a period of high electric power demand, and is configured to calculate the target CO₂ recovery amount to be larger than other periods during a period of low electric power demand, while maintaining the planned CO₂ recovery amount.

6. The control device (17, 17A, 17B, 17C) for a CO₂ recovery device (15) according to any one of claims 1 to 5,
wherein the planning unit (36) is configured to calculate a planned CO₂ recovery scheduled amount from a start of the specific period to a predetermined time point,
the control device for a CO₂ recovery device (15) further comprises
a first measuring unit (39) that measures an actual CO₂ recovery amount recovered from the start of the specific period to the predetermined time point, and
when the calculated planned CO₂ recovery scheduled amount and the measured actual CO₂ recovery amount do not match,
the setting unit (37) is configured to recalculate the target CO₂ recovery amount in accordance with a difference value between the planned CO₂ recovery scheduled amount and the actual CO₂ recovery amount.

7. The control device (17, 17A, 17B, 17C) for a CO₂ recovery device (15) according to claim 6,
wherein the setting unit (37) evenly divides the difference value between the planned CO₂ recovery scheduled amount and the actual CO₂ recovery amount by a remaining unit period of the specific period, and sets a new target CO₂ recovery amount based on the evenly divided value and the previous target CO₂ recovery amount.

8. The control device (17, 17A, 17B, 17C) for a CO₂ recovery device (15) according to any one of claims 5 to 7, further comprising:
a third acquisition unit (40) that is configured to acquire a planned CO₂ recovery amount for the specific period planned in another plant,
wherein the second acquisition unit (38) is configured to acquire an electric power demand forecast for each region of its own plant and the other plant in the specific period, and
the setting unit (37) is configured to set, while maintaining a total planned CO₂ recovery amount of the own plant and the other plant, the target CO₂ recovery amount in accordance with a ratio of an electric power demand in the region of the own plant to an electric power demand of an entire region of the own plant and the other plant.

9. The control device (17, 17A, 17B, 17C) for a CO₂ recovery device (15) according to any one of claims 1 to 8, further comprising:
a second measuring unit that is configured to measure a weight ratio for each predetermined composition of the combustible material,
wherein the first acquisition unit (30) is configured to acquire the ratio of weights of the biomass-derived combustible material and the non-biomass-derived combustible material to the weight of the combustible material, based on a measurement value of the second measuring unit.

10. A control method for a CO₂ recovery device (17, 17A, 17B, 17C) for controlling an operation of the CO₂ recovery device (15), the CO₂ recovery device (15) being disposed on a downstream side of a combustion furnace (12) that combusts a combustible material in which a biomass-derived combustible material and a non-biomass-derived combustible material are mixed and recovering CO₂ in exhaust gas generated in the combustion furnace (12), the control method comprising:
a step (S1) of acquiring a ratio of weights of the biomass-derived combustible material and the non-biomass-derived combustible material to a weight of the combustible material introduced into the combustion furnace (12);
a step of calculating (S2) a ratio of CO₂ generated from the biomass-derived combustible material and the non-biomass-derived combustible material to CO₂ generated from the combustible material in accordance with the acquired ratio of the biomass-derived combustible material and the non-biomass-derived combustible material; and
a step of calculating (S4) an intake amount (Q1) of the exhaust gas to the CO₂ recovery device (15) based on the calculated ratio of the CO₂ generated from the non-biomass-derived combustible material and a flow rate of the exhaust gas;
the method being **characterized by** comprising the further steps:
planning a planned CO₂ recovery amount to be recovered in a specific period from an amount of CO₂ generated in the specific period and the ratio of the CO₂ generated from the non-biomass-derived combustible material; and
setting a target CO₂ recovery amount to be recovered per unit period shorter than the specific period in accordance with the planned CO₂ recovery amount which is planned,
calculating the intake amount of the exhaust gas in accordance with the target CO₂ recovery amount and the flow rate of the exhaust gas.

11. A program for controlling an operation of a CO₂ recovery device (15) that is disposed on a downstream side of a combustion furnace (12) that combusts a combustible material in which a biomass-derived combustible material and a non-biomass-derived combustible material are mixed and recovers CO₂ in exhaust gas generated in the combustion furnace (12), the program causing a computer that operates as a control device for the CO₂ recovery device (15) to execute:
a step of acquiring a ratio of weights of the biomass-derived combustible material and the non-biomass-derived combustible material to a weight of the combustible material introduced into the combustion furnace (12);
a step of calculating a ratio of CO₂ generated from the biomass-derived combustible material and the non-biomass-derived combustible material to CO₂ generated from the combustible material in accordance with the acquired ratio of the biomass-derived combustible material and the non-biomass-derived combustible material; and
a step of calculating an intake amount of the exhaust gas to the CO₂ recovery device (15) based on the calculated ratio of the CO₂ generated from the non-biomass-derived combustible material and a flow rate of the exhaust gas; the program causing a computer that operates as a control device for the CO₂ recovery device (15) being characterized to execute the further steps:
planning a planned CO₂ recovery amount to be recovered in a specific period from an amount of CO₂ generated in the specific period and the ratio of the CO₂ generated from the non-biomass-derived combustible material; and
setting a target CO₂ recovery amount to be recovered per unit period shorter than the specific period in accordance with the planned CO₂ recovery amount which is planned,
calculating the intake amount of the exhaust gas in accordance with the target CO₂ recovery amount and the flow rate of the exhaust gas.

## Patentansprüche

1. Steuerungs- bzw. Regelungsvorrichtung (17, 17A, 17B, 17C) für eine CO₂-Rückgewinnungsvorrichtung (15) zum Steuern bzw. Regeln eines Betriebs der CO₂-Rückgewinnungsvorrichtung (15), wobei die CO₂-Rückgewinnungsvorrichtung (15) auf einer stromabwärtigen Seite eines Verbrennungsofens (12) angeordnet ist, der ein brennbares Material verbrennt, bei dem ein aus Biomasse gewonnenes brennbares Material und ein nicht aus Biomasse gewonnenes brennbares Material gemischt sind, und CO₂ aus in dem Verbrennungsofen (12) erzeugtem Abgas rückgewinnt, wobei die Steuerungs- bzw. Regelungsvorrichtung (17, 17A, 17B, 17C) umfasst:
eine erste Erfassungseinheit (30), die konfiguriert ist, ein Verhältnis von Gewichten des aus Biomasse gewonnenen brennbaren Materials und des nicht aus Biomasse gewonnenen brennbaren Materials zu einem Gewicht des in den Verbrennungsofen (12) eingebrachten brennbaren Materials zu erfassen;
eine erste Berechnungseinheit (31), die konfiguriert ist, ein Verhältnis (n [%]) von CO₂, das aus dem aus Biomasse gewonnenen brennbaren Material und dem nicht aus Biomasse gewonnenen brennbaren Material erzeugt wird, zu CO₂, das aus dem brennbaren Material erzeugt wird, gemäß dem erfassten Verhältnis des aus Biomasse gewonnenen brennbaren Materials und des nicht aus Biomasse gewonnenen brennbaren Materials zu berechnen; und
eine zweite Berechnungseinheit (32), die konfiguriert ist, eine Aufnahmemenge (Q1) des Abgases zu der CO₂-Rückgewinnungsvorrichtung (15) basierend auf dem berechneten Verhältnis (γ) des CO₂, das aus dem nicht aus Biomasse gewonnenen brennbaren Material erzeugt wird, und einer Strömungsrate (Q) des Abgases zu berechnen, **dadurch gekennzeichnet, dass** sie umfasst:
eine Planungseinheit (36), die konfiguriert ist, eine geplante CO₂-Rückgewinnungsmenge, die in einem spezifischen Zeitraum aus einer in dem spezifischen Zeitraum erzeugten CO₂-Menge rückzugewinnen ist, und das Verhältnis des CO₂, das aus dem nicht aus Biomasse gewonnenen brennbaren Material erzeugt wird, zu planen; und
eine Festlegungseinheit (37), die konfiguriert ist, eine CO₂-Sollrückgewinnungsmenge, die pro Einheit Zeitraum rückzugewinnen ist, der kürzer als der spezifische Zeitraum ist, gemäß der geplanten CO₂-Rückgewinnungsmenge, die geplant ist, festzulegen,
wobei die zweite Berechnungseinheit (32) konfiguriert ist, die Aufnahmemenge des Abgases gemäß der CO₂-Sollrückgewinnungsmenge und der Strömungsrate des Abgases zu berechnen.

2. Steuerungs- bzw. Regelungsvorrichtung (17, 17A, 17B, 17C) für eine CO₂-Rückgewinnungsvorrichtung (15) nach Anspruch 1,
wobei die CO₂-Rückgewinnungsvorrichtung (15) mit einem Abzweigströmungspfad (19) verbunden ist, der von einem Abgasströmungspfad (18) abzweigt, der den Verbrennungsofen (12) und einen Schornstein (16) verbindet, und zwar über eine Strömungsrateneinstellvorrichtung (21), und
die Steuerungs- bzw. Regelungsvorrichtung (17, 17A, 17B, 17C) für eine CO₂-Rückgewinnungsvorrichtung (15) ferner umfasst
eine Einstelleinheit (17), die einen Öffnungsgrad der Strömungsrateneinstellvorrichtung (21) gemäß der berechneten Aufnahmemenge des Abgases einstellt.

3. Steuerungs- bzw. Regelungsvorrichtung (17, 17A, 17B, 17C) für eine CO₂-Rückgewinnungsvorrichtung (15) nach Anspruch 1 oder 2,
wobei die Festlegungseinheit (37) konfiguriert ist, die CO₂-Sollrückgewinnungsmenge dahingehend festzulegen, gleich oder größer als eine CO₂-Rückgewinnungsmenge zu sein, die zur Erreichung von Klimaneutralität erforderlich ist.

4. Steuerungs- bzw. Regelungsvorrichtung (17, 17A, 17B, 17C) für eine CO₂-Rückgewinnungsvorrichtung (15) nach einem der Ansprüche 1 bis 3,
wobei die zweite Berechnungseinheit (32) konfiguriert ist, ein Abgasaufnahmeverhältnis anhand der CO₂-Sollrückgewinnungsmenge und einer vorbestimmten vorläufigen Rückgewinnungsrate festzulegen, und konfiguriert ist, die Aufnahmemenge des Abgases anhand des Abgasaufnahmeverhältnisses und der Strömungsrate des Abgases zu berechnen.

5. Steuerungs- bzw. Regelungsvorrichtung (17, 17A, 17B, 17C) für eine CO₂-Rückgewinnungsvorrichtung (15) nach einem der Ansprüche 1 bis 4, ferner umfassend:
eine Leistungs- bzw. Stromerzeugungsvorrichtung (13), die Leistung bzw. Strom durch Nutzung einer Abwärme des in dem Verbrennungsofen (12) erzeugten Abgases erzeugt; und
eine zweite Erfassungseinheit (38), die konfiguriert ist, eine Elektrische-Leistung- bzw. Strom-Bedarfsprognose zu erfassen,
wobei die Festlegungseinheit (37) konfiguriert ist, die CO₂-Sollrückgewinnungsmenge während eines Zeitraums hoher Stromnachfrage geringer als in anderen Zeiträumen zu berechnen, und konfiguriert ist, die CO₂-Sollrückgewinnungsmenge während eines Zeitraums niedriger Stromnachfrage höher als in anderen Zeiträumen zu berechnen, während die geplante CO₂-Rückgewinnungsmenge beibehalten wird.

6. Steuerungs- bzw. Regelungsvorrichtung (17, 17A, 17B, 17C) für eine CO₂-Rückgewinnungsvorrichtung (15) nach einem der Ansprüche 1 bis 5,
wobei die Planungseinheit (36) konfiguriert ist, eine geplante CO₂-Rückgewinnungsplanmenge ab einem Beginn des spezifischen Zeitraums bis zu einem vorbestimmten Zeitpunkt zu berechnen,
wobei die Steuerungs- bzw. Regelungsvorrichtung für eine CO₂-Rückgewinnungsvorrichtung (15) ferner umfasst
eine erste Messeinheit (39), die eine tatsächliche CO₂-Rückgewinnungsmenge misst, die ab dem Beginn des spezifischen Zeitraums bis zu dem vorbestimmten Zeitpunkt rückgewonnen wird, und
wenn die berechnete geplante CO₂-Rückgewinnungsplanmenge und die gemessene tatsächliche CO₂-Rückgewinnungsmenge nicht übereinstimmen, die Festlegungseinheit (37) konfiguriert ist, die CO₂-Sollrückgewinnungsmenge gemäß einem Differenzwert zwischen der geplanten CO₂-Rückgewinnungsplanmenge und der tatsächlichen CO₂-Rückgewinnungsmenge neu zu berechnen.

7. Steuerungs- bzw. Regelungsvorrichtung (17, 17A, 17B, 17C) für eine CO₂-Rückgewinnungsvorrichtung (15) nach Anspruch 6,
wobei die Festlegungseinheit (37) den Differenzwert zwischen der geplanten CO₂-Rückgewinnungsplanmenge und der tatsächlichen CO₂-Rückgewinnungsmenge gleichmäßig durch eine verbleibende Einheit Zeitraum des spezifischen Zeitraums teilt und basierend auf dem gleichmäßig geteilten Wert und der vorherigen CO₂-Sollrückgewinnungsmenge eine neue CO₂-Sollrückgewinnungsmenge festlegt.

8. Steuerungs- bzw. Regelungsvorrichtung (17, 17A, 17B, 17C) für eine CO₂-Rückgewinnungsvorrichtung (15) nach einem der Ansprüche 5 bis 7, ferner umfassend:
eine dritte Erfassungseinheit (40), die konfiguriert ist, eine geplante CO₂-Rückgewinnungsmenge für den in einer anderen Anlage geplanten Zeitraum zu erfassen,
wobei die zweite Erfassungseinheit (38) konfiguriert ist, eine Elektrische-Leistung- bzw. Strom-Bedarfsprognose für jeden Bereich ihrer eigenen Anlage und der anderen Anlage in dem spezifischen Zeitraum zu erfassen,
wobei die Festlegungseinheit (37) konfiguriert ist, unter Beibehaltung einer geplanten CO₂-Gesamtückgewinnungsmenge der eigenen Anlage und der anderen Anlage die CO₂-Sollrückgewinnungsmenge gemäß einem Verhältnis eines Strombedarfs in dem Bereich der eigenen Anlage zu einem Strombedarf eines gesamten Bereichs der eigenen Anlage und der anderen Anlage festzulegen.

9. Steuerungs- bzw. Regelungsvorrichtung (17, 17A, 17B, 17C) für eine CO₂-Rückgewinnungsvorrichtung (15) nach einem der Ansprüche 1 bis 8, ferner umfassend:
eine zweite Messeinheit, die konfiguriert ist, ein Gewichtsverhältnis für jede vorbestimmte Zusammensetzung des brennbaren Materials zu messen,
wobei die erste Erfassungseinheit (30) konfiguriert ist, das Verhältnis von Gewichten des aus Biomasse gewonnenen brennbaren Materials und des nicht aus Biomasse gewonnenen brennbaren Materials zu dem Gewicht des brennbaren Materials basierend auf einem Messwert der zweiten Messeinheit zu erfassen.

10. Steuerungs- bzw. Regelungsverfahren für eine CO₂-Rückgewinnungsvorrichtung (17, 17A, 17B, 17C) zum Steuern bzw. Regeln eines Betriebs der CO₂-Rückgewinnungsvorrichtung (15), wobei die CO₂-Rückgewinnungsvorrichtung (15) auf einer stromabwärtigen Seite eines Verbrennungsofens (12) angeordnet ist, der ein brennbares Material verbrennt, bei dem ein aus Biomasse gewonnenes brennbares Material und ein nicht aus Biomasse gewonnenes brennbares Material gemischt sind, und CO₂ aus in dem Verbrennungsofen (12) erzeugtem Abgas rückgewinnt, wobei das Steuerungs- bzw. Regelungsverfahren umfasst:
einen Schritt (S1) des Erfassens eines Verhältnisses von Gewichten des aus Biomasse gewonnenen brennbaren Materials und des nicht aus Biomasse gewonnenen brennbaren Materials zu einem Gewicht des in den Verbrennungsofen (12) eingebrachten brennbaren Materials;
einen Schritt des Berechnens (S2) eines Verhältnisses von CO₂, das aus dem aus Biomasse gewonnenen brennbaren Material und dem nicht aus Biomasse gewonnenen brennbaren Material erzeugt wird, zu CO₂, das aus dem brennbaren Material erzeugt wird, gemäß dem erfassten Verhältnis des aus Biomasse gewonnenen brennbaren Materials und des nicht aus Biomasse gewonnenen brennbaren Materials; und
einen Schritt des Berechnens (S4) einer Aufnahmemenge (Q1) des Abgases zu der CO₂-Rückgewinnungsvorrichtung (15) basierend auf dem berechneten Verhältnis des CO₂, das aus dem nicht aus Biomasse gewonnenen brennbaren Material erzeugt wird, und einer Strömungsrate des Abgases;
wobei das Verfahren **dadurch gekennzeichnet ist, dass** es die weiteren Schritte umfasst:
Planen einer geplanten CO₂-Rückgewinnungsmenge, die in einem spezifischen Zeitraum aus einer in dem spezifischen Zeitraum erzeugten CO₂-Menge rückzugewinnen ist, und des Verhältnisses des CO₂, das aus dem nicht aus Biomasse gewonnenen brennbaren Material erzeugt wird; und
Festlegen einer CO₂-Sollrückgewinnungsmenge, die pro Einheit Zeitraum rückzugewinnen ist, der kürzer als der spezifische Zeitraum ist, gemäß der geplanten CO₂-Rückgewinnungsmenge, die geplant ist,
Berechnen der Aufnahmemenge des Abgases gemäß der CO₂-Sollrückgewinnungsmenge und der Strömungsrate des Abgases.

11. Programm zum Steuern bzw. Regeln eines Betriebs einer CO₂-Rückgewinnungsvorrichtung (15), die auf einer stromabwärtigen Seite eines Verbrennungsofens (12) angeordnet ist, der ein brennbares Material verbrennt, bei dem ein aus Biomasse gewonnenes brennbares Material und ein nicht aus Biomasse gewonnenes brennbares Material gemischt sind, und CO₂ aus in dem Verbrennungsofen (12) erzeugtem Abgas rückgewinnt, wobei das Programm einen Computer, der als eine Steuerungs- bzw. Regelungsvorrichtung für die CO₂-Rückgewinnungsvorrichtung (15) wirkt, veranlasst, auszuführen:
einen Schritt des Erfassens eines Verhältnisses von Gewichten des aus Biomasse gewonnenen brennbaren Materials und des nicht aus Biomasse gewonnenen brennbaren Materials zu einem Gewicht des in den Verbrennungsofen (12) eingebrachten brennbaren Materials;
einen Schritt des Berechnens eines Verhältnisses von CO₂, das aus dem aus Biomasse gewonnenen brennbaren Material und dem nicht aus Biomasse gewonnenen brennbaren Material erzeugt wird, zu CO₂, das aus dem brennbaren Material erzeugt wird, gemäß dem erfassten Verhältnis des aus Biomasse gewonnenen brennbaren Materials und des nicht aus Biomasse gewonnenen brennbaren Materials; und
einen Schritt des Berechnens einer Aufnahmemenge des Abgases zu der CO₂-Rückgewinnungsvorrichtung (15) basierend auf dem berechneten Verhältnis des CO₂, das aus dem nicht aus Biomasse gewonnenen brennbaren Material erzeugt wird, und einer Strömungsrate des Abgases;
wobei das Programm, das einen Computer, der als eine Steuerungs- bzw. Regelungsvorrichtung für die CO₂-Rückgewinnungsvorrichtung (15) wirkt, veranlasst, **dadurch gekennzeichnet ist, dass** es die weiteren Schritte ausführt:
Planen einer geplanten CO₂-Rückgewinnungsmenge, die in einem spezifischen Zeitraum aus einer in dem spezifischen Zeitraum erzeugten CO₂-Menge rückzugewinnen ist, und des Verhältnisses des CO₂, das aus dem nicht aus Biomasse gewonnenen brennbaren Material erzeugt wird; und
Festlegen einer CO₂-Sollrückgewinnungsmenge, die pro Einheit Zeitraum rückzugewinnen ist, der kürzer als der spezifische Zeitraum ist, gemäß der geplanten CO₂-Rückgewinnungsmenge, die geplant ist,
Berechnen der Aufnahmemenge des Abgases gemäß der CO₂-Sollrückgewinnungsmenge und der Strömungsrate des Abgases.

## Revendications

1. Dispositif de commande (17, 17A, 17B, 17C) pour un dispositif de récupération de CO₂ (15) pour la commande d'un fonctionnement du dispositif de récupération de CO₂ (15), le dispositif de récupération de CO₂ (15) étant disposé sur un côté aval d'un four de combustion (12) qui brûle un matériau combustible dans lequel un matériau combustible dérivé de biomasse et un matériau combustible non dérivé de biomasse sont mélangés et récupérant du CO₂ dans des gaz d'échappement générés dans le four de combustion (12), le dispositif de commande (17, 17A, 17B, 17C) comprenant :
une première unité d'acquisition (30) qui est configurée pour acquérir un rapport des poids du matériau combustible dérivé de biomasse et du matériau combustible non dérivé de biomasse sur un poids du matériau combustible introduit dans le four de combustion (12) ;
une première unité de calcul (31) qui est configurée pour calculer un rapport (η [%]) du CO₂ généré à partir du matériau combustible dérivé de biomasse et du matériau combustible non dérivé de biomasse sur le CO₂ généré à partir du matériau combustible conformément au rapport acquis du matériau combustible dérivé de biomasse et du matériau combustible non dérivé de biomasse ; et
une deuxième unité de calcul (32) qui est configurée pour calculer une quantité d'admission (Q1) du gaz d'échappement vers le dispositif de récupération de CO₂ (15) sur la base du rapport calculé (γ) du CO₂ généré à partir du matériau combustible non dérivé de biomasse et d'un débit (Q) du gaz d'échappement, **caractérisé par le fait qu'**il comprend :
une unité de planification (36) qui est configurée pour planifier une quantité de récupération de CO₂ planifiée devant être récupérée pendant une période spécifique à partir d'une quantité de CO₂ générée pendant la période spécifique et du rapport du CO₂ généré à partir du matériau combustible non dérivé de biomasse ; et
une unité de réglage (37) qui est configurée pour régler une quantité de récupération de CO₂ cible devant être récupérée par période unitaire plus courte que la période spécifique conformément à la quantité de récupération de CO₂ planifiée qui est planifiée,
dans lequel la deuxième unité de calcul (32) est configurée pour calculer la quantité d'admission du gaz d'échappement conformément à la quantité de récupération de CO₂ cible et au débit du gaz d'échappement.

2. Dispositif de commande (17, 17A, 17B, 17C) pour un dispositif de récupération de CO₂ (15) selon la revendication 1,
dans lequel le dispositif de récupération de CO₂ (15) est raccordé à un chemin d'écoulement de ramification (19) ramifié à partir d'un chemin d'écoulement de gaz d'échappement (18) raccordant le four de combustion (12) et une cheminée (16) via un dispositif de réglage de débit (21), et
le dispositif de commande (17, 17A, 17B, 17C) pour un dispositif de récupération de CO₂ (15) comprend en outre
une unité de réglage (17) qui règle un degré d'ouverture du dispositif de réglage de débit (21) conformément à la quantité d'admission calculée des gaz d'échappement.

3. Dispositif de commande (17, 17A, 17B, 17C) pour un dispositif de récupération de CO₂ (15) selon la revendication 1 ou 2,
dans lequel l'unité de réglage (37) est configurée pour régler la quantité de récupération de CO₂ cible afin qu'elle soit égale ou supérieure à une quantité de récupération de CO₂ requise pour parvenir à la neutralité carbone.

4. Dispositif de commande (17, 17A, 17B, 17C) pour un dispositif de récupération de CO₂ (15) selon l'une quelconque des revendications 1 à 3,
dans lequel la deuxième unité de calcul (32) est configurée pour régler un rapport d'admission de gaz d'échappement à partir de la quantité de récupération de CO₂ cible et d'un taux de récupération préliminaire prédéterminé, et est configurée pour calculer la quantité d'admission des gaz d'échappement à partir du rapport d'admission de gaz d'échappement et du débit des gaz d'échappement.

5. Dispositif de commande (17, 17A, 17B, 17C) pour un dispositif de récupération de CO₂ (15) selon l'une quelconque des revendications 1 à 4, comprenant en outre :
un dispositif de génération d'énergie (13) qui génère de l'énergie en utilisant une chaleur des gaz d'échappement générés dans le four de combustion (12) ; et
une deuxième unité d'acquisition (38) qui est configurée pour acquérir une prévision de demande d'énergie électrique,
dans lequel l'unité de réglage (37) est configurée pour calculer la quantité de récupération de CO₂ cible afin qu'elle soit inférieure à d'autres périodes pendant une période de forte demande d'énergie électrique, et est configurée pour calculer la quantité de récupération de CO₂ cible afin qu'elle soit supérieure à d'autres périodes pendant une période de faible demande d'énergie électrique, tout en maintenant la quantité de récupération de CO₂ planifiée.

6. Dispositif de commande (17, 17A, 17B, 17C) pour un dispositif de récupération de CO₂ (15) selon l'une quelconque des revendications 1 à 5,
dans lequel l'unité de planification (36) est configurée pour calculer une quantité programmée de récupération de CO₂ planifiée à partir d'un début de la période spécifique jusqu'à un instant prédéterminé,
le dispositif de commande pour un dispositif de récupération de CO₂ (15) comprend en outre
une première unité de mesure (39) qui mesure une quantité de récupération de CO₂ réelle récupérée du début de la période spécifique jusqu'à l'instant prédéterminé, et
lorsque la quantité programmée de récupération de CO₂ planifiée calculée et la quantité de récupération de CO₂ réelle mesurée ne concordent pas,
l'unité de réglage (37) est configurée pour recalculer la quantité de récupération de CO₂ cible conformément à une valeur de différence entre la quantité programmée de récupération de CO₂ planifiée et la quantité de récupération de CO₂ réelle.

7. Dispositif de commande (17, 17A, 17B, 17C) pour un dispositif de récupération de CO₂ (15) selon la revendication 6,
dans lequel l'unité de réglage (37) divise uniformément la valeur de différence entre la quantité programmée de récupération de CO₂ planifiée et la quantité de récupération de CO₂ réelle par une période unitaire restante de la période spécifique, et règle une nouvelle quantité de récupération de CO₂ cible sur la base de la valeur divisée uniformément et de la quantité de récupération de CO₂ cible précédente.

8. Dispositif de commande (17, 17A, 17B, 17C) pour un dispositif de récupération de CO₂ (15) selon l'une quelconque des revendications 5 à 7, comprenant en outre :
une troisième unité d'acquisition (40) qui est configurée pour acquérir une quantité de récupération de CO₂ planifiée pour la période spécifique planifiée dans une autre installation,
dans lequel la deuxième unité d'acquisition (38) est configurée pour acquérir une prévision de demande d'énergie électrique pour chaque région de sa propre installation et de l'autre installation pendant la période spécifique, et
l'unité de réglage (37) est configurée pour régler, tout en maintenant une quantité de récupération de CO₂ planifiée totale de la propre installation et de l'autre installation, la quantité de récupération de CO₂ cible conformément à un rapport d'une demande d'énergie électrique dans la région de la propre installation sur une demande d'énergie électrique d'une totalité de la région de la propre installation et de l'autre installation.

9. Dispositif de commande (17, 17A, 17B, 17C) pour un dispositif de récupération de CO₂ (15) selon l'une quelconque des revendications 1 à 8, comprenant en outre :
une deuxième unité de mesure qui est configurée pour mesurer un rapport pondéral pour chaque composition prédéterminée du matériau combustible,
dans lequel la première unité d'acquisition (30) est configurée pour acquérir le rapport des poids du matériau combustible dérivé de biomasse et du matériau combustible non dérivé de biomasse sur le poids du matériau combustible, sur la base d'une valeur de mesure de la deuxième unité de mesure.

10. Méthode de commande pour un dispositif de récupération de CO₂ (17, 17A, 17B, 17C) pour la commande d'un fonctionnement du dispositif de récupération de CO₂ (15), le dispositif de récupération de CO₂ (15) étant disposé sur un côté aval d'un four de combustion (12) qui brûle un matériau combustible dans lequel un matériau combustible dérivé de biomasse et un matériau combustible non dérivé de biomasse sont mélangés et récupérant du CO₂ dans des gaz d'échappement générés dans le four de combustion (12), la méthode de commande comprenant :
une étape (S1) d'acquisition d'un rapport des poids du matériau combustible dérivé de biomasse et du matériau combustible non dérivé de biomasse sur un poids du matériau combustible introduit dans le four de combustion (12) ;
une étape de calcul (S2) d'un rapport du CO₂ généré à partir du matériau combustible dérivé de biomasse et du matériau combustible non dérivé de biomasse sur le CO₂ généré à partir du matériau combustible conformément au rapport acquis du matériau combustible dérivé de biomasse et du matériau combustible non dérivé de biomasse ; et
une étape de calcul (S4) d'une quantité d'admission (Q1) du gaz d'échappement vers le dispositif de récupération de CO₂ (15) sur la base du rapport calculé du CO₂ généré à partir du matériau combustible non dérivé de biomasse et d'un débit du gaz d'échappement ;
la méthode étant **caractérisée par le fait qu'**elle comprend les étapes suivantes :
la planification d'une quantité de récupération de CO₂ planifiée devant être récupérée pendant une période spécifique à partir d'une quantité de CO₂ générée pendant la période spécifique et du rapport du CO₂ généré à partir du matériau combustible non dérivé de biomasse ; et
le réglage d'une quantité de récupération de CO₂ cible devant être récupérée par période unitaire plus courte que la période spécifique conformément à la quantité de récupération de CO₂ planifiée qui est planifiée,
le calcul de la quantité d'admission du gaz d'échappement conformément à la quantité de récupération de CO₂ cible et au débit du gaz d'échappement.

11. Programme pour la commande d'un fonctionnement d'un dispositif de récupération de CO₂ (15) qui est disposé sur un côté aval d'un four de combustion (12) qui brûle un matériau combustible dans lequel un matériau combustible dérivé de biomasse et un matériau combustible non dérivé de biomasse sont mélangés et récupérant du CO₂ dans des gaz d'échappement générés dans le four de combustion (12), le programme amenant un ordinateur qui fonctionne comme un dispositif de commande pour le dispositif de récupération de CO2 (15) à exécuter :
une étape d'acquisition d'un rapport des poids du matériau combustible dérivé de biomasse et du matériau combustible non dérivé de biomasse sur un poids du matériau combustible introduit dans le four de combustion (12) ;
une étape de calcul d'un rapport du CO₂ généré à partir du matériau combustible dérivé de biomasse et du matériau combustible non dérivé de biomasse sur le CO₂ généré à partir du matériau combustible conformément au rapport acquis du matériau combustible dérivé de biomasse et du matériau combustible non dérivé de biomasse ; et
une étape de calcul d'une quantité d'admission du gaz d'échappement vers le dispositif de récupération de CO2 (15) sur la base du rapport calculé du CO2 généré à partir du matériau combustible non dérivé de biomasse et d'un débit du gaz d'échappement ; le programme, amenant un ordinateur qui fonctionne comme un dispositif de commande pour le dispositif de récupération de CO₂ (15), étant caractérisé pour exécuter les étapes suivantes :
la planification d'une quantité de récupération de CO₂ planifiée devant être récupérée pendant une période spécifique à partir d'une quantité de CO₂ générée pendant la période spécifique et du rapport du CO₂ généré à partir du matériau combustible non dérivé de biomasse ; et
le réglage d'une quantité de récupération de CO₂ cible devant être récupérée par période unitaire plus courte que la période spécifique conformément à la quantité de récupération de CO₂ planifiée qui est planifiée,
le calcul de la quantité d'admission du gaz d'échappement conformément à la quantité de récupération de CO₂ cible et au débit du gaz d'échappement.
